# EUROPEAN PATENT SPECIFICATION

(11) **EP 2 782 724 B1**
(45) Date of publication and mention of the grant of the patent: **04.05.2016**
(21) Application number: 12795032.7
(22) Date of filing: 21.11.2012
(51) Int. Cl.: B26D 1/25, B26D 5/10, A01K 97/04

(54) **FOODSTUFF AND BAIT BALL CUTTER**
FUTTER- UND KÖDERBALLSCHNEIDER
ALIMENT ET DISPOSITIF DE DÉCOUPE DE BOULES D'APPÂT

(30) Priority: 25.11.2011 GB 201120377
(43) Date of publication of application: 01.10.2014
(73) Proprietor: Bellhouse, Ian, Bugle, St Austell PL26 8GT (GB)
(72) Inventor: Bellhouse, Ian, Bugle, St Austell PL26 8GT (GB)
(74) Representative: Lucas, Brian Ronald
(86) International application number: PCT/GB2012/052875
(87) International publication number: WO 2013/076477

(56) References cited:
- DE-A1- 3 739 206
- DE-U1- 20 311 725
- GB-A- 2 450 623

## Description

### Field of the Invention

The present invention relates to devices for cutting balls of foodstuff and bait and the like. It is particularly concerned with a device for cutting balls from firm to hard vegetables, fruit and squashes, cooked meats including luncheon and sausage meat, dough and cheese and fishing bait, all hereinafter referred to as foodstuff..

### Background to the Invention

Tools exist which with which foodstuff can be cut into balls but these often produce misshapen or partial balls. The document DE 37 39 206 A discloses an apparatus for cutting shaped pieces from potatoes.

### Summary of the Invention

According to the present invention there is provided a device for cutting balls from foodstuff and bait and the like, the device comprising:
a cutting ring;
a bracket rotatably holding the cutting ring and arranged for being pushed into foodstuff with the cutting ring; and
a shaft to which the cutting ring is attached and carrying a handle.

The cutting ring may comprise a rigid ring of metal, such as stainless steel, or plastic, perhaps reinforced of wall thickness somewhat less than 1mm or may have formed thereon a cutting edge. Preferably there is a cutting edge extending substantially completely around both edges of the cutting ring. If the cutting edge comprises a bevel this preferably is such that the cutting edge coincides with the inner surface of the ring. The preferred cutting ring is right circular but shapes for producing any body of revolution are possible, for example a right cylinder, or a body which is on side view a diamond, an oval, a flattened sphere, etc.

The bracket advisedly is of U-shape in side view with two arms supporting the cutting ring and is relatively sharp at the outer ends. It is accordingly advantageously formed from stainless steel and preferably has a base plate wherewith the user can push the bracket with the ring into the foodstuff. The base plate may be formed with a dimple sized to accommodate a user's thumb. This confers the added advantage of imparting rigidity to the bracket whilst facilitating the insertion of the device into a foodstuff.

The ring may be arranged to graze the bracket when in vertical array with respect thereto. Preferably however there is a clearance of between 1.0 and 2.0 mm which serves to assist in ensuring the required resulting foodstuff shape and can also enable the device to operate beneath a skin or a perhaps undesirable outer surface.

The cutting ring and perhaps the bracket may be Teflon coated.

The handle, preferably rigidly mounted on the shaft, may be disc shaped with the disc aligned or coplanar with the cutting ring so as to indicate the position and configuration of the ring within the foodstuff.

The shaft includes, at the side of the ring remote from the main body thereof, a spindle which also engages the bracket. The bracket may be arranged so that the shaft is a snap fit therein, perhaps by the provision of a keyway running from the outer edge of one of the bracket arms. A shaft diameter of the order of 2mm is usually sufficient to ensure adequate rigidity whilst being susceptible of being pushed into the foodstuff. To augment the latter facility however the shaft may be formed with somewhat cutting edges, normal to the plane of the cutting ring, at least adjacent the bracket.

Typical dimensions to the device are an overall length of 9.0 to 11.0 cm and a cutting ring size of 2.0 to 3.0 cm. Indeed the device may constitute one of a set having rings of, for example, 2.0 cm, 2.3 cm, 2.5 cm and 3cm. Moreover the set may comprise additionally devices with non-circular rings preferably within a similar range of dimensions. For creating balls of bait however the cutting ring diameter may be of the order of 12 mm.

In use, the device is pressed into a foodstuff by pressing the bracket base plate into the foodstuff with the cutting ring substantially flat to the food surface. When the base plate has engaged the foodstuff surface the handle is turned at least one full revolution to cut the ball shape. Then, perhaps with the cutting ring in a vertical position relative to the bracket the device may be withdrawn from the food stuff bringing the ball with it.

### Brief Description of the Drawings

Embodiments of the invention will now be described by way of example with reference to the accompanying drawings, of which:
Figure 1 is an isometric view of a foodstuff ball cutter;
Figure 2 is an exploded view illustrating the components of the cutter shown in figure 1, with figure 2a being a section on IIa - IIa;
Figure 3 is a further isometric view of the device;
Figure 4 is a section on IV-IV in figure 3, except that a handle is shown as a disk in the form of a washer; and
Figure 5 is a sketch of the device in operation.

### Description of Preferred Embodiments

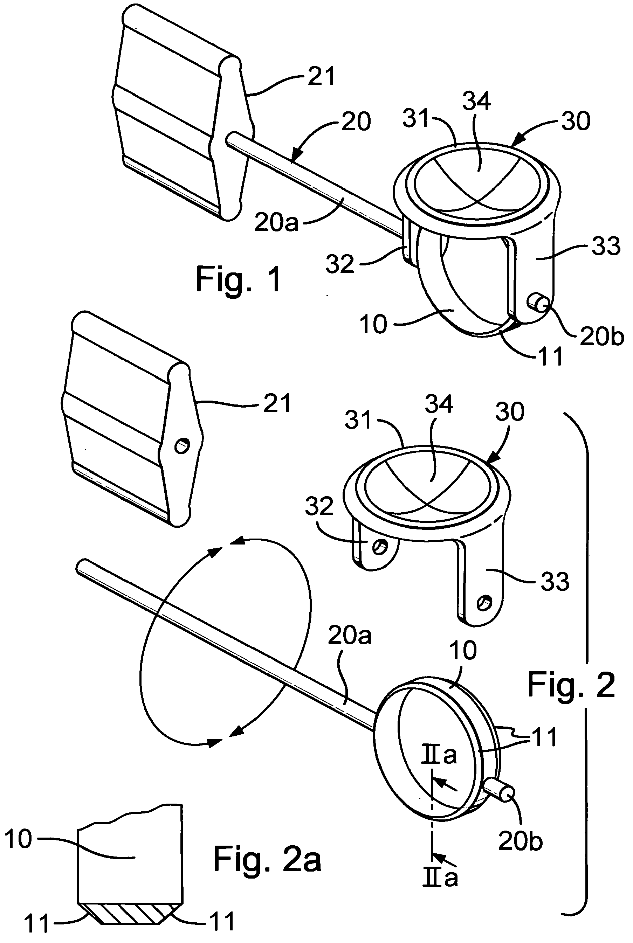

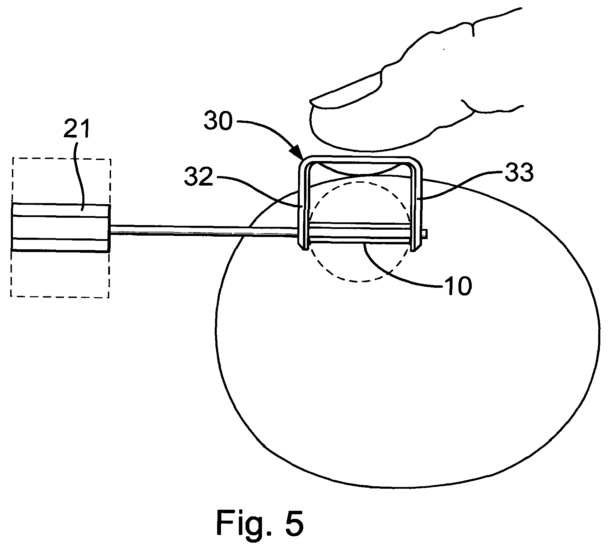

The device shown in figures 1 to 5 comprises a cutting ring 10, a shaft 20 to which the cutting ring 10 is rigidly mounted, a handle 21 on the shaft 20, distal from the cutting ring 10, and a bracket 30.

The cutting ring 10 has a bevel 11 formed on both edges thereof so as to present a cutting edge contiguous with the inner surface of the ring.

The shaft 20 comprises a main portion 20a and a spindle portion 20b rigidly attached at diametrically opposite sides of the ring 10.

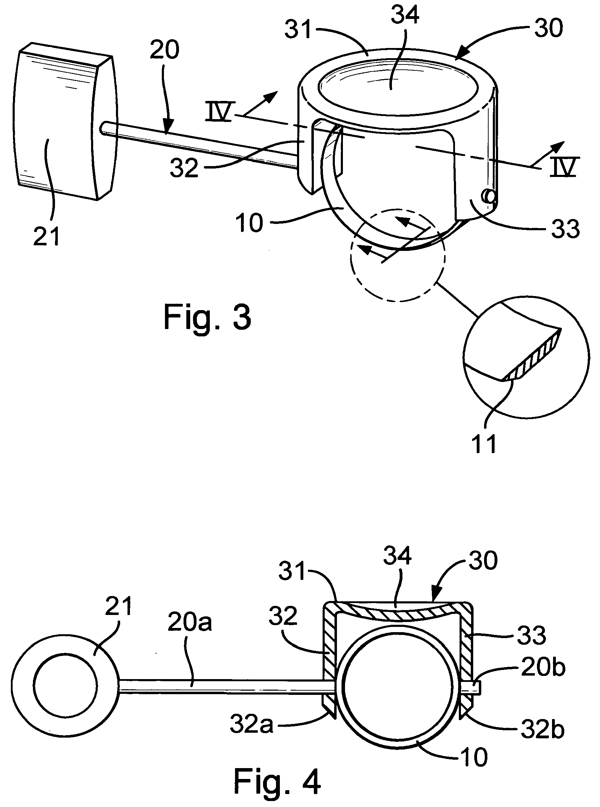

The handle 21 is shown as resembling a bicycle foot pedal but in figure 4 as a disk, in fact a washer, of diameter similar to that of the cutting ring 10. The handle 21 is coplanar with the cutting ring 10.

The bracket 30 is substantially U-shaped in side elevation, comprising a base plate portion 31 and two arm members 32 and 33. The shaft portion 20a passes through a hole in the arm member 32 and the spindle portion 20b is received in an equivalent hole in the arm member 33. The outer or upper edges 32a, 32b of the arm members are sharpened, with a cutting edge contiguous with the inner surface of the arms 32, 33. The bracket base plate portion 31 has a dimple 34 formed therein.

In a particular embodiment of the device the cutting ring 10, the bracket 30 and the shaft 20 are formed from stainless steel and the device is one of a set having cutting rings 10 of different sizes, in fact 20mm, 23mm, 25mm and 30mm, with the brackets 30 sized accordingly so that there is a 1.0 mm gap between the cutting ring 10 and the dimple 34 when the cutting ring 10 is in the vertical position. The bracket 30 has a wall thickness of the order of 0.8 mm. The overall length of the device, of which the main portion is a rod of outside diameter 2.0 mm so that even the shaft readily enters the foodstuff, is from 9.0 to 11.0 cm dependent upon the size of the ring. In use, the device is pressed into a foodstuff by pressing the bracket base plate into the foodstuff with the cutting ring substantially flat to the food surface. When the base plate has engaged the foodstuff surface the handle is turned at least one full revolution to cut the ball shape. Then, with the cutting ring in a vertical position relative to the bracket the device is withdrawn from the food stuff bringing the ball with it.

## Claims

1. A device for cutting balls from foodstuff and **characterised by**:
a cutting ring (10);
a bracket (30) rotatably holding the cutting ring (10) and arranged for being pushed into foodstuff with the cutting ring (10); and
a shaft (20) to which the cutting ring (10) is attached and carrying a handle (21).

2. A device as claimed in claim 1 and wherein the cutting ring comprises a rigid ring of metal.

3. A device as claimed in claim 1 or claim 2 and wherein the cutting ring has formed thereon a cutting edge.

4. A device as claimed in claim 3 and wherein the cutting edge comprises a bevel such that the cutting edge coincides with the inner surface of the ring.

5. A device as claimed in any one of the preceding claims and wherein the cutting ring is right circular or shaped for producing any body of revolution.

6. A device as claimed in any one of the preceding claims and wherein the bracket is of U-shape in side view with two arms supporting the cutting ring and is sharp at the outer ends thereof.

7. A device as claimed in any one of the preceding claims and wherein the bracket and the cutting ring are formed from stainless steel.

8. A device as claimed in any one of the preceding claims and wherein the bracket has a base plate wherewith the user can push the bracket with the ring into the foodstuff.

9. A device as claimed in claim 8 and wherein the base plate is formed with a dimple sized to accommodate a user's thumb.

10. A device as claimed in any one of the preceding claims and there is a clearance of between 1.0 and 2.0 mm between the cutting ring and the base of the bracket when the cutting ring is in a vertical position with respect to the bracket.

11. A device as claimed in any one of the preceding claims and wherein the handle on the shaft is coplanar with the cutting ring.

12. A device as claimed in any one of the preceding claims and wherein the handle is disc shaped.

13. A device as claimed in any one of the preceding claims and having an overall length of 9.0 to 11.0 cm and a cutting ring size of 2.0 to 3.0 cm.

14. A device as claimed in any one of the preceding claims and constituting one of a set of such devices

15. A device as claimed in claim 14 and wherein the devices in the set have cutting rings of the order of, 2.0 cm, 2.3 cm, 2.5 cm and 3cm diameter.

## Patentansprüche

1. Vorrichtung zum Schneiden von Kugeln aus Nahrungsmitteln, **gekennzeichnet durch**:
einen Schneidring (10);
eine Halterung (30), die den Schneidring (10) drehbar hält und dafür ausgelegt ist, mit dem Schneidring (10) in ein Nahrungsmittel gedrückt zu werden; und
einen Stiel (20), an dem der Schneidring (10) befestigt ist und der einen Griff (21) trägt.

2. Vorrichtung nach Anspruch 1, wobei der Schneidring einen starren Ring aus metall umfasst.

3. Vorrichtung nach Anspruch 1 oder Anspruch 2, wobei an dem Schneidring eine Schneidkante ausgebildet ist.

4. Vorrichtung nach Anspruch 3, wobei die Schneidkante eine Abschrägung umfasst, so dass die Schneidkante mit der inneren Oberfläche des Rings zusammentrifft.

5. Vorrichtung nach einem der vorhergehenden Ansprüche, wobei der Schneidring kreisförmig ist oder zum Erzeugen eines beliebigen Rotationskörpers geformt ist.

6. Vorrichtung nach einem der vorhergehenden Ansprüche, wobei die Halterung in der Seitenansicht eine U-Form mit zwei Armen aufweist, die den Schneidring halten, und die an ihren äußeren Enden scharf ist.

7. Vorrichtung nach einem der vorhergehenden Ansprüche, wobei die Halterung und der Schneidring aus Edelstahl gebildet sind.

8. Vorrichtung nach einem der vorhergehenden Ansprüche, wobei die Halterung eine Basisplatte aufweist, mit der der Benutzer die Halterung mit dem Ring in das Nahrungsmittel drücken kann.

9. Vorrichtung nach Anspruch 8, wobei die Basisplatte mit einer Vertiefung ausgebildet ist, die so bemessen ist, dass der Daumen eines Benutzers aufgenommen werden kann.

10. Vorrichtung nach einem der vorhergehenden Ansprüche, wobei zwischen dem Schneidring und der Basis der halterung ein Abstand von 1,0 bis 2,0 mm vorhanden ist, wenn sich der Schneidring in Bezug auf die Halterung in einer vertikalen Position befindet.

11. Vorrichtung nach einem der vorhergehenden Ansprüche, wobei der Griff an dem Stiel mit dem Schneidring koplanar ist.

12. Vorrichtung nach einem der vorhergehenden Ansprüche, wobei der Griff scheibenförmig ist.

13. Vorrichtung nach einem der vorhergehenden Ansprüche, wobei sie eine Gesamtlänge von 9,0 bis 11,0 cm hat und die Größe des Schneidrings 2,0 bis 3,0 cm beträgt.

14. Vorrichtung nach einem der vorhergehenden Ansprüche, die ein Teil eines Satzes derartiger Vorrichtungen bildet.

15. Vorrichtung nach Anspruch 14, wobei die Vorrichtungen in dem Satz Schneidringe mit einem Durchmesser in der Größenordnung von 2,0 cm, 2,3 cm, 2,5 cm und 3 cm aufweisen.

## Revendications

1. Dispositif permettant la découpe de boules de produit alimentaire et **caractérisé par** :
une bague de découpe (10) ;
un support (30) soutenant en rotation la bague de découpe (10) et agencé en vue d'être poussé dans le produit alimentaire avec la bague de découpe (10) ; et
une tige (20) à laquelle la bague de découpe (10) est fixée et portant une poignée (21).

2. Dispositif selon la revendication 1 et dans lequel la bague de découpe comprend une bague de métal rigide.

3. Dispositif selon la revendication 1 ou la revendication 2 et dans lequel la bague de découpe présente, formé sur elle, un bord de découpe.

4. Dispositif selon la revendication 3 et dans lequel le bord de découpe présente un biseau de telle sorte que le bord de découpe coïncide avec la surface intérieure de la bague.

5. Dispositif selon l'une quelconque des revendications précédentes et dans lequel la bague de découpe est circulaire droite ou configurée en vue de produire un quelconque corps de révolution.

6. Dispositif selon l'une quelconque des revendications précédentes et dans lequel le support est configuré en forme de U, en vue latérale, avec deux bras supportant la bague de découpe et est tranchant au niveau de ses extrémités extérieures.

7. Dispositif selon l'une quelconque des revendications précédentes et dans lequel le support et la bague de découpe sont façonnés à partir d'acier inoxydable.

8. Dispositif selon l'une quelconque des revendications précédentes et dans lequel le support possède une plaque de base au moyen de laquelle l'utilisateur peut pousser le support avec la bague dans le produit alimentaire.

9. Dispositif selon la revendication 8 et dans lequel la plaque de base est formée avec un creux dimensionné pour recevoir le pouce d'un utilisateur.

10. Dispositif selon l'une quelconque des revendications précédentes et dans lequel il existe un intervalle compris entre 1,0 et 2,0 mm entre la bague de découpe et la base du support lorsque la bague de découpe se trouve dans une position verticale par rapport au support.

11. Dispositif selon l'une quelconque des revendications précédentes et dans lequel la poignée située sur la tige est coplanaire avec la bague de découpe.

12. Dispositif selon l'une quelconque des revendications précédentes et dans lequel la poignée est configurée en forme de disque.

13. Dispositif selon l'une quelconque des revendications précédentes et présentant une longueur totale de 9,0 à 11,0 cm et une dimension de bague de découpe de 2,0 à 3,0 cm.

14. Dispositif selon l'une quelconque des revendications précédentes et constituant l'un d'un ensemble de tels dispositifs.

15. Dispositif selon 1 a revendication 14 est dans lequel les dispositifs de l'ensemble présentent des bagues de découpe de l'ordre de 2,0 cm, 2,3 cm, 2,5 cm et 3 cm de diamètre.
